(19) Europäisches Patentamt
European Patent Office
Office européen des brevets

(11) **EP 1 953 909 A1**

(12) **EUROPÄISCHE PATENTANMELDUNG**

(43) Veröffentlichungstag:
**06.08.2008 Patentblatt 2008/32**

(51) Int Cl.:
*H02M 7/06* (2006.01)      *H02M 7/08* (2006.01)
*H02M 7/12* (2006.01)      *H02M 7/145* (2006.01)
*H02M 7/155* (2006.01)      *H02M 7/17* (2006.01)

(21) Anmeldenummer: 07101724.8

(22) Anmeldetag: **05.02.2007**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK RS**

(71) Anmelder: **Breitmaier, Max**
**8113 Uerikon (CH)**

(72) Erfinder: **Breitmaier, Max**
**8113 Uerikon (CH)**

(74) Vertreter: **Rutz, Peter**
**RUTZ & PARTNER**
**Alpenstrasse 14**
**Postfach 4627**
**6304 Zug (CH)**

(54) **Wechselstrom-Gleichstrom-Umrichter ohne Gleichrichterelemente auf der Sekundärseite des Transformators**

(57)  Die Vorrichtung, die der Erzeugung einer Gleichspannung oder eines Gleichstromes, dient, weist wenigstens ein Gleichrichterelement (D) und wenigstens einen Transformator (T) auf, der wenigstens eine über Leiter (PL1, PL2) einer Stromversorgungsleitung (PL) mit einer Wechselspannungsquelle (Q) verbundene Primärwicklung (W1) und wenigstens eine mit einer Last (Z) verbundene Sekundärwicklung (W2) aufweist, die an einem zugehörigen Magnetgestell (JK) angeordnet sind, das der Führung eines magnetischen Flusses Φ dient. Erfindungsgemäss ist die Primärwicklung (W1) über das Gleichrichterelement (D) mit der Wechselspannungsquelle (Q) verbunden, so dass für jede Wechselspannungs-Halbwelle entsprechender Polarität ein Strom I1 durch das Gleichrichterelement (D) und durch die Primärwicklung (W1) führbar ist, der den magnetischen Fluss Φ stets in derselben Richtung durch das Magnetgestell (JK) treibt.

**FIG. 10**

**Beschreibung**

Die Erfindung betrifft eine der Erzeugung einer Gleichspannung oder eines Gleichstromes dienende, mit einem Transformator versehene Vorrichtung sowie ein entsprechendes Verfahren.

Gemäss [1], Andreas Kremser, Grundzüge elektrischer Maschinen und Antriebe, Teubner Verlag, Stuttgart, 1997, Seite 47 stehen am Anfang des Übertragungswegs elektrischer Energie die Maschinentransformatoren, die die Generatorspannung auf die Übertragungsspannung umspannen. In Netzknoten werden sogenannte Netzkupplungstransformatoren eingesetzt, die oft als Spartransformatoren ausgeführt werden. Die Verteilungstransformatoren dienen der Endversorgung der Verbraucher aus dem Mittelspannungsnetz (Leistungen ab 50 kVA bis 2500 kVA, Oberspannung von 3,6 bis 24 kV, Unterspannung überwiegend 400 V, maximal 1,1 kV). Kleintransformatoren zur Versorgung von Steuer- und Regeleinrichtungen werden hauptsächlich einphasig gebaut (Leistungen einige VA bis einige kVA, Oberspannung überwiegend 230/400 V).

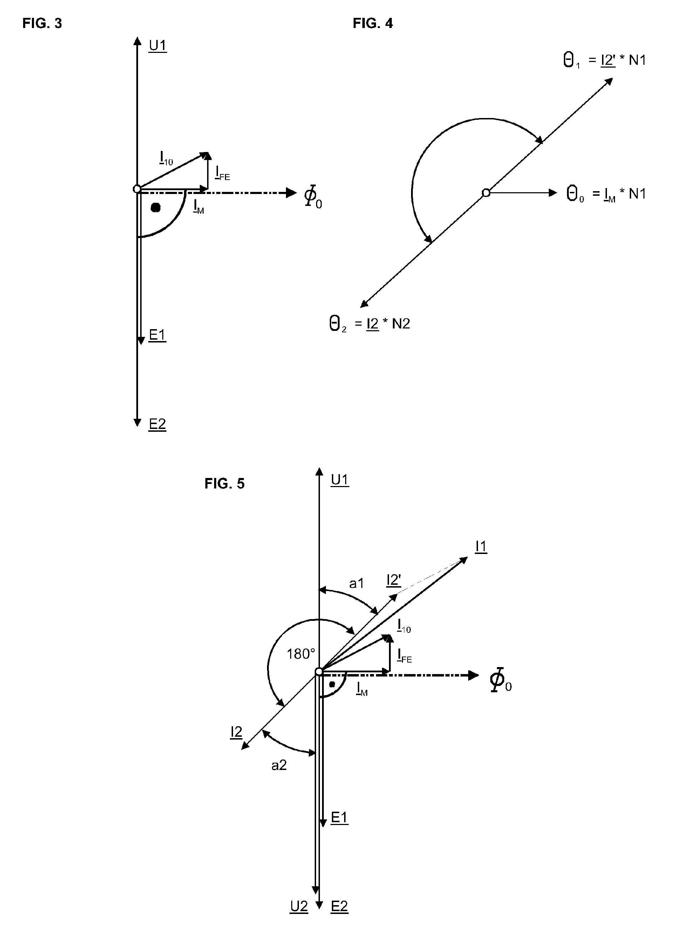

Figur 3 (siehe auch [1], Seite 52, Bild 3.4 sowie [2], R. Oberholzer, Konstruktion elektrischer Maschinen, I. Transformatoren, Zentralschweizerisches Technikum, Luzern 1979) zeigt das Vektordiagramm für einen leerlaufenden Transformator. Eine am unbelasteten Transformator anliegende Wechselspannung U1 treibt einen Erregerstrom $I_{10}$ durch die Primärwicklung des Transformators. Der Erregerstrom $I_{10}$ setzt sich aus zwei Komponenten zusammen, nämlich dem Magnetisierungsstrom $I_M$ und dem Eisenverluststrom $I_{FE}$. Der Magnetisierungsstrom $I_M$, der der Wechselspannung U1 um 90° nacheilt, ist in Phase mit dem magnetischen Fluss $\Phi$ im Magnetgestell, das typischerweise aus mehreren bewickelten Schenkeln oder Kernen aufgebaut ist. Der Eisenverluststrom $I_{FE}$ ist in Phase mit der Wechselspannung U1.

Das Produkt aus der Wechselspannung U1 und dem Eisenverluststrom $I_{FE}$ ergibt die Eisenverlustleistung, die sich aus Hysteresis- und Wirbelstromverlusten zusammensetzt. Das Produkt aus dem Magnetisierungsstrom $I_M$ und der Windungszahl N1 der Primärwindung W1 ergibt eine erste primäre magnetische Durchflutung (auch magnetische Spannung) $\theta_0$, welche den magnetischen Fluss $\Phi_0$ durch den magnetischen Kreis treibt. Der magnetische Fluss $\Phi_0$ ist mit der Primärwicklung W1 und der Sekundärwicklung W2 des Transformators verkettet und erzeugt in diesen die Spannungen E1 und E2. Die an der Primärwicklung resultierende Spannung E1 ist der angelegten Spannung U1 um 180° entgegengesetzt und um den Spannungsabfall $I_{10}$ * Z1 (Z1 ist die Impedanz der Primärwicklung) reduziert. Der Spannungsabfall $I_{10}$*Z1 beträgt bei Leistungstransformatoren nur 0,3% - 1% der Klemmenspannung U1 und wird nachstehend vernachlässigt. Figur 3 stellt somit das vereinfachte Vektordiagramm des Transformators im Leerlauf dar.

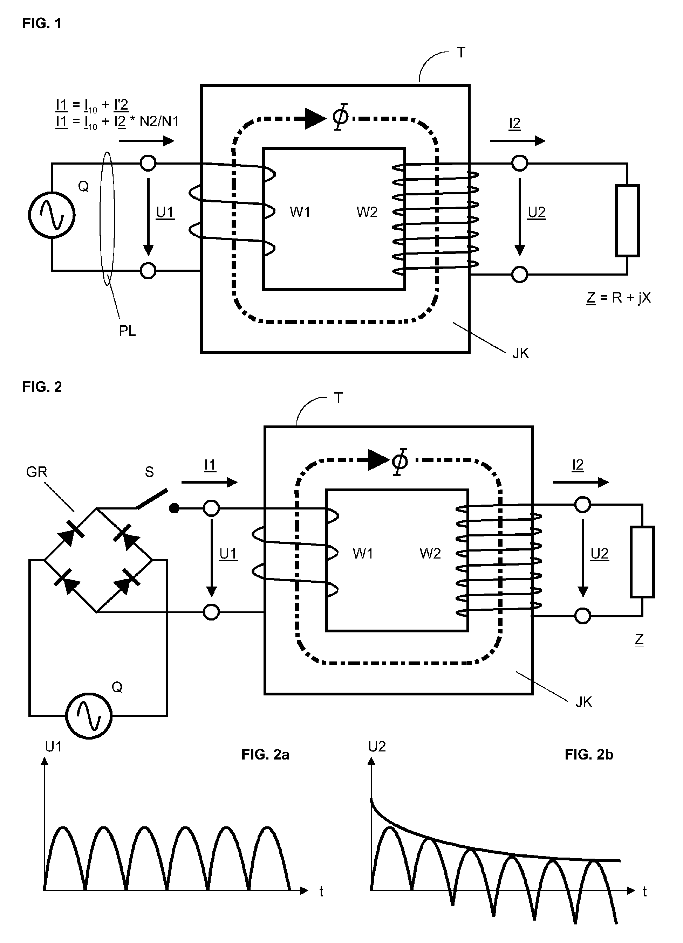

Wird an die Sekundärwicklung W2 des Transformators eine Impedanz Z angeschlossen, wie dies in Figur 1 gezeigt ist, fliesst in der Sekundärwicklung W2 ein Sekundärstrom I2, den die in der Sekundärwicklung W2 induzierte Spannung E2 durch den Sekundärkreis treibt.

Der Sekundärstrom I2 bildet mit den Windungen N2 der Sekundärwicklung eine sekundäre magnetische Durchflutung $\theta_2$, welche einen sekundären magnetischen Fluss $\Phi_2$ erzeugt, der dem primärseitig erzeugten magnetischen Fluss $\Phi_0$ entgegen wirkt und diesen aufzuheben trachtet. Um dies zu verhindern, muss in der Primärwicklung W1 zusätzlich zum Leerlaufstrom I10 ein Kompensationsstrom I2' fliessen, der in den Windungen der Primärwicklung W1 eine zusätzliche primäre magnetische Durchflutung $\theta_1$ bewirkt, der einen zusätzlichen primären magnetischen Fluss $\Phi_1$ erzeugt. Damit ein Gleichgewicht der beiden magnetischen Durchflutungen $\theta_1$ und $\theta_2$ resultiert und sich die magnetischen Flüsse $\Phi_1$ und $\Phi_2$ aufheben, gilt für den Kompensationsstrom I2' die Beziehung: I2' = I2 * N2/N1. Resultierend verbleibt der magnetische Fluss $\Phi_0$, der durch die erste primäre magnetische Durchflutung $\theta_0$ bewirkt wird, wie dies in Figur 4 gezeigt ist.

Von den Belastungsströmen I2 und I2' hervorgerufene Streuflüsse, die durch geeignete Massnahmen möglichst tief gehalten werden, werden für die weiteren Betrachtungen vernachlässigt.

In Figur 5 sind die bei ohmisch-induktiver Belastung des Transformators vorhandenen Grössen dargestellt. Der Durchtritt des Sekundärstroms I2 durch die Belastungsimpedanz $\underline{Z}$ ergibt die sekundäre Klemmenspannung U2, die aufgrund des Spannungsabfalls am ohmschen Widerstand der Sekundärwicklung W2 und dem Streuspannungsabfall kleiner ist, als die induzierte Sekundärspannung E2, die zusammen mit der induzierten Primärspannung E2 dem Magnetisierungsfluss $\Phi_0$ um 90° nacheilt.

In [1], Kapitel 3.10.1, Seiten 72 und 73 sind die Vorgänge beim Zuschalten eines leer laufenden Transformators an das starre Netz beschrieben.

Die Spannungsgleichung des leerlaufenden Transformators lautet

$$u_1 = R_1\ i1 + L_1\ di_1\ /\ dt.$$

Die stationäre Lösung dieser Differenzialgleichung erster Ordnung mit sinusformiger Störgrösse

$$u1(t) = \sqrt{2}\ U_N\ \sin(\omega t)\ \text{lautet}$$

$$\Phi_{STAT}(t) = \Phi_N\ 1/Z_0\ (R_1\ \sin(\omega t)\ -\ X_1\ \cos(\omega t))\ \text{bzw.}$$

$$\Phi_{STAT}(t) = \Phi_N\ \sin(\omega t\ -\ \varphi_0)$$

mit

$$\tan\ \varphi_0 = (X_1\ /\ R_1)$$

Unmittelbar nach dem Schalten muss der Fluss jedoch Null sein, $\Phi(0) = 0$, so dass die Lösung ausser dem stationären Term noch einen flüchtigen Anteil bzw. ein Ausgleichsglied enthält:

$$\Phi(t) = \Phi_{STAT}(t)\ +\ \Phi_N\ X_1/Z_0\ *\ e^{-t/\tau}$$

Das Ausgleichsglied $\Phi_N * X_1/Z_0 * e^{-t/\tau}$ klingt mit der Zeitkonstante $\tau$ ab, wobei gilt $\tau = L_1 / R_1$.
Wegen $R_1 << X_1$ wird als Maximalwert nach der ersten Halbperiode etwa der doppelte Wert des stationären Flusses erreicht.

$$\Phi_{max}\ \approx\ 2\ *\ \Phi_N$$

Gemäss [3], Betriebsverhalten eines Transformators (Versuch TR), D-ITET, Professur für Leistungselektronik und Messtechnik, Fachgruppe Antriebs- und Magnetlagertechnik der ETH Zürich, (siehe

http://www.eek.ee.ethz.ch/student/fachpraktikum-mave/anleitungen/TR.pdf )

lösen beim Zuschalten eines Transformators ans Netz die Sicherungsautomaten gelegentlich selbst dann aus, wenn keine Last an der Sekundärseite angeschlossen ist. Gemäss [3] ist es aufgrund der Phasenverschiebung zwischen der angelegten Spannung U1 und dem magnetischen Fluss $\Phi$ von Vorteil, den Transformator im Zeitpunkt des Spannungsmaximums oder - minimums einzuschalten, in dem der Fluss $\Phi$ gleich Null ist. Der Fluss $\Phi$ ist nämlich mit der gespeicherten magnetischen Energie gekoppelt und kann sich deshalb nicht sprungförmig verändern. Schaltet man hingegen im Nulldurchgang der Spannung ein, beginnt der Fluss $\Phi$ nicht beim Maximalwert $\Phi_{max}$ sondern ebenfalls bei $\Phi = 0$ und steigt nach einer halben Periode auf maximal $\pm\ 2\Phi$, dem von der Spannungszeitfläche vorgegebenen gesamten Flusshub. Damit kommt der Kern weit in die Sättigung mit entsprechend hohem Magnetisierungsstrom $I_M$. Nach kurzer Zeit klingt der Ausgleichsvorgang ab, und der Transformator geht in den stationären Zustand über, wie dies in [1], Seite 73 beschrieben ist.
Für die weiteren Betrachtungen ist wesentlich, dass diese störenden Einschaltvorgänge in der Praxis nach Möglichkeit vermieden werden, wobei geeignete Massnahmen in [3] beschrieben sind (beispielsweise zeitgenaues Einschalten im Spannungsmaximum mit Halbleiterschaltern).
Gemäss [1], Seite 1, werden zur Umformung elektrischer Energie Gleichrichter und Transformatoren verwendet. Die Umformung von Wechselstrom in Wechselstrom erfolgt mittels Transformatoren. Die Umformung von Wechselstrom in Gleichstrom erfolgt mittels Gleichrichtern. Aus diesen Feststellungen folgt der Grundsatz, dass die Gleichrichter den Transformatoren immer nachgeschaltet, d.h. an deren Sekundärseite vorgesehen sind. D.h., zuerst wird die Wechselspannung mittels eines Transformators gewandelt und erst dann mittels eines Gleichrichters gleichgerichtet.

Für verschiedene Anwendungen werden grosse Ströme bei geringer Spannung benötigt, z.B. in der Widerstands-Schweisstechnik oder in galvanischen Anlagen. Im umgekehrten Fall werden kleine Gleichströme bei hoher Spannung benötigt wie z.B. bei Staubfilteranlagen. Zur Umwandlung eines Wechselstromes in einen grossen Gleichstrom sind speziell gekühlte Halbleiter erforderlich. Hohe Spannungen führen seitens der Halbleiter zu erheblichen Problemen bei der Isolation und stellen grosse Anforderungen an die Sperrspannungen der Halbleiter. Aufgrund der hohen Belastungen der Halbleiter oder aufgrund einwirkender Störungen, wie Überspannungen, treten gelegentlich Defekte an den Halbleitern auf, die unter Umständen zur Zerstörung einer gesamten Halbleitergruppe führen können, wodurch sehr hohe Kostenfolgen resultieren können, die in der Grössenordnung der Kosten des vorgeschalteten Transformators liegen können.

Für verschiedene Anwendungen und individuelle Anforderungen der Anwender werden zudem zahlreiche verschiedene der Gleichrichtung dienende Halbleiter benötigt, die jeweils das letzte Glied der Kette von Einheiten bilden, die der Wandlung elektrischer Energie bilden. Durch die Vielzahl unterschiedlicher Halbleiter-Bausteine resultieren entsprechend hohe Produktions-, Lager-, Vertriebs- und Wartungskosten.

Der vorliegenden Erfindung liegt nun die Aufgabe zugrunde, eine der Erzeugung einer Gleichspannung oder eines Gleichstromes dienende Vorrichtung zu schaffen und ein Verfahren anzugeben, bei denen die beschriebenen Nachteile vermieden werden.

Insbesondere ist eine der Erzeugung einer Gleichspannung oder eines Gleichstromes dienende Vorrichtung zu schaffen, mittels der die Wandlung elektrischer Energie besonders vorteilhaft realisierbar ist.

Ferner ist eine der Erzeugung einer Gleichspannung oder eines Gleichstromes dienende Vorrichtung zu schaffen, mittels der die Wandlung elektrischer Energie die von einer Stromquelle über eine oder mehr Phasenleiter abgegeben werden, vorteilhaft realisierbar ist.

Weiterhin soll mit der erfindungsgemässen Vorrichtung die Möglichkeit geschaffen werden, Halbleitergleichrichter in wenigen verschiedenen Ausgestaltungen in einem weiten Einsatzbereich zu verwenden.

Weiterhin sollen die Halbleitergleichrichter besser gegen lastseitige Störungen geschützt werden.

Diese Aufgabe wird mit einer Vorrichtung und einem Verfahren gelöst, welche die in Anspruch 1 bzw. 13 angegebenen Merkmale aufweist. Vorteilhafte Ausgestaltungen der Erfindung sind in weiteren Ansprüchen angegeben.

Die Vorrichtung, die der Erzeugung einer Gleichspannung oder eines Gleichstromes dient, weist wenigstens ein Gleichrichterelement, vorzugsweise ein steuerbares Gleichrichterelement, beispielsweise ein Thyristor oder ein Triac, und wenigstens einen Transformator mit wenigstens einer Primärwicklung und wenigstens einer Sekundärwicklung auf.

Die wenigstens eine Primärwicklung, die über Leiter einer ein- oder mehr-phasigen Stromversorgungsleitung mit einer Wechselspannungsquelle verbunden ist, und die wenigstens eine mit einer Last verbundene Sekundärwicklung sind an einem zugehörigen, der Führung eines magnetischen Flusses Φ dienenden Magnetgestell angeordnet, welches in beliebigen bekannten Bauformen mit der entsprechenden Anzahl von Jochs und Kernen realisierbar ist, die wenigstens einen magnetischen Kreis bilden.

Erfindungsgemäss ist die wenigstens eine Primärwicklung über das Gleichrichterelement mit der Wechselspannungsquelle verbunden, so dass für jede Wechselspannungs-Halbwelle entsprechender Polarität ein Primärstrom I1 durch das Gleichrichterelement und durch die Primärwicklung führbar ist, der den magnetischen Fluss Φ stets in derselben Richtung durch das Magnetgestell bzw. den darin realisierten magnetischen Kreis treibt.

Mit jeder Halbwelle entsprechender Polarität wird der Transformator bzw. die Primärwicklung mittels des gegebenenfalls gesteuerten Halbleiterelements mit dem Stromversorgungsnetz verbunden, so dass ein Primärstrom fliessen kann, der zumindest annähernd, d.h. abhängig von der zwischen zwei Halbwellen gleicher Polarität erfolgten vollständigen oder teilweisen Relaxation der stationären Maschine bzw. des Transformators, dem Einschaltstrom entspricht. D.h., die im Magnetgestell bzw. im Eisen sowie im Luftspalt gespeicherte Energie werden, während des Auftretens der ungenutzten Halbwelle, soweit abgegeben, dass der Transformator in den Zustand vor der Übertragung der Halbwelle zurückkehrt.

Die im Luftspalt gespeicherte magnetische Energie vergrössert die Blindleistung, wird jedoch fast verlustfrei wieder abgegeben. Anhand der Wahl der Abmessungen des Luftspalts kann hingegen über dem Eisen auftretende Feldstärke $H_{FE}$ sowie die jeweils resultierende Remanenz BR in gewünschter Weise beeinflusst werden. Der Feldstärkebedarf und damit der Magnetisierungsstrom steigen, bei Verwendung eines Luftspalts, die Kennlinie des Transformators wird geschert bzw. linearisiert. Es besteht daher eine Wechselwirkung zwischen dem Luftspalt und dem Magnetisierungsstrom, die es erlaubt, die Einschaltvorgänge und somit auch die Ausschaltvorgänge des Transformators vorteilhaft zu beeinflussen.

Nach dem erfindungsgemässen Verfahren

Bei Verwendung einer Diode als Gleichrichterelement, leitet bzw. "schaltet" dieses kurz nach dem Nulldurchgang der Wechselspannungs-Halbwelle. Der magnetische Fluss $\varphi$ beginnt bei $\varphi = 0$ und steigt nach einer halben Periode auf maximal $\pm 2\varphi$, dem von der Spannungszeitfläche vorgegebenen gesamten Flusshub. Daher resultiert auch eine Verdoppelung der im Sekundärkreis gemessenen Grössen. Damit der Kern mit dem entsprechend hohen Magnetisierungsstrom $I_M$ nicht in die Sättigung kommt, kann der Luftspalt entsprechend dimensioniert werden. Aufgrund der Distanzen zwischen den Halbwellen gleicher Polarität geht der Transformator nicht in einen Zustand über, der beim konventionellen Betrieb von Transformatoren als stationär bezeichnet wird.

Die Diode leitet dabei, solange bis der Primärstrom I1, bzw. die Summe des Magnetisierungsstroms $I_M$ und des Kompensationsstroms I2' null wird. Da die Diode nach dem Nulldurchgang des Primärstroms I1 sperrt und die zweite Halbwelle nicht überträgt, wird ein pulsierender Gleichstrom übertragen. Sekundärseitig resultieren Halbwellen des Sekundärstroms I2 und der Sekundärspannung U2, die stets dieselbe Polarität aufweisen.

Vorzugsweise über getrennte magnetische Kreise können erfindungsgemäss auch beide Halbwellen übertragen und einer Last zugeführt werden. Werden zwei Teiltransformatoren, die je nur den halben Strom führen, phasenrichtig zusammengeschaltet, so ergänzen sich die beiden Impulsfolgen zu einem pulsierenden Gleichstrom. Weil aber pro Teiltransformator nur gleichsinnige Halbwellen übertragen werden, fliessen in den Teiltransformatoren nur die halben Nennströme und erzeugen bei gleichem Leiterquerschnitt nur 1/4 der Verluste (Pv = (I/2)^2 * R). Die Summe der Typenleistungen beider Teiltransformatoren ist somit kleiner als die Typenleistung eines entsprechenden Normaltrafos.

Ist die Lückung zwischen zwei Pulsen hingegen gross genug, kann anstelle von zwei Teiltransformatoren nur ein Transformator verwendet werden, der zwei Primärwicklungen aufweist, die je eine Halbwelle polaritätsrichtig übertragen.

Die erfindungsgemässe Lösung ist auch bei mehr-phasigen Systemen besonders vorteilhaft anwendbar. Dabei können pro Phase wiederum nur eine oder beide Halbwellen übertragen werden. Sekundärseitig tritt daher eine Spannung mit stark reduzierter Welligkeit auf.

Die erfindungsgemässe Lösung kann für verschiedenartige Bauformen und Leistungen von Transformatoren angewendet werden. Beispielsweise werden EI-, UI- oder 3UI-Blechformen verwendet.

Die erfindungsgemässe Lösung weist zahlreiche Vorteile auf. Die Erzeugung einer Gleichspannung erfolgt mit einfachen Massnahmen und unter Nutzung dafür vorteilhafter Eigenschaften des Transformators, nämlich des Einschaltverhaltens, das bis anhin als nachteilig betrachtet wurde. Besonders vorteilhaft ist ferner, dass die Halbleiter-Gleichrichter durch den Transformator von der Anwenderseite entkoppelt und damit einerseits besser geschützt und andererseits vorteilhafter wählbar sind. Insbesondere lassen sich die Halbleiter-Gleichrichter in geringer Anzahl von Typen standardisieren, da primärseitig stets gleiche oder ähnliche Konditionen vorherrschen und die Anpassung an die vielfältigen Bedürfnisse des Anwenders durch entsprechende Dimensionierung oder Beschaltung der Wicklungselemente des Transformators wählbar ist. Besonders vorteilhaft ist weiterhin, dass die Grösse und Polarität der sekundärseitig erzeugten Gleichspannung mit einfachen Mitteln, d.h. durch Umschaltung des Übersetzungsverhältnisses oder durch die Umpolung von Wicklungen, problemlos einstellbar ist.

Die erfindungsgemässe Lösung kann zudem in jedem Leistungsbereich vorteilhaft eingesetzt werden. Im Bereich sehr hoher Leistungen können die Herstellungskosten und insbesondere auch die Wartungskosten für die Leistungselektronik deutlich reduziert werden.

Nachfolgend wird die Erfindung anhand von Zeichnungen näher erläutert. Dabei zeigt:

Figur 1 einen Transformator T, dessen Primärwicklung W1 mit einer Wechselspannungsquelle Q und dessen Sekundärwicklung W2 mit einer Last Z verbunden ist;

Figur 2 den Transformator T von Figur 1 mit einer Gleichrichterbrücke GR, welche der Primärwicklung W1 des Transformators T über einen Schalter S eine pulsierende Gleichspannung U1 zuführt;

Figur 2a die von der Gleichrichterbrücke GR von Figur 2 abgegebene pulsierende Gleichspannung;

Figur 2b nach dem Schliessen des Schalters S von Figur 2, den Übergang der Sekundärspannung U2 in einen stationären Zustand;

Figur 3 das vereinfachte Vektordiagramm des Transformators T von Figur 1 im Leerlauf;

Figur 4 die Durchflutungen $\theta_0$, $\theta_1$, und $\theta_2$ des Transformators T von Figur 1 bei Belastung;

Figur 5 das vereinfachte Vektordiagramm des Transformators T von Figur 1 bei ohmisch-induktiver Belastung;

Figur 6 zeigt eine erfindungsgemässe Vorrichtung mit dem Transformator T von Figur 1 und mit einem steuerbaren Gleichrichterelement D, über das der Primärwicklung W1 des Transformators T über einen Schalter S Wechselspannungs-Halbwellen U1 gleicher Polarität zugeführt werden;

Figur 7a     den Verlauf der Primärspannung U1 und des innerhalb der positiven Halbwelle übertragenen Primärstromes I1, der sich aus dem Magnetisierungsstrom $I_M$ und dem Kompensationsstrom I2' zusammensetzt;

Figur 7b     den zum Primärstrom I1 korrespondierenden Verlauf der Sekundärspannung U2 und des Sekundärstromes I2;

Figur 8      eine erfindungsgemässe Vorrichtung mit zwei Transformatoren T1, T2, deren Primärwicklungen $W_{11}$; $W_{12}$ je über ein Gleichrichterelement D1, D2 mit der Wechselspannungsquelle Q verbunden sind, und deren Sekundärwicklungen $W_{21}$ bzw. $W_{22}$ derart mit der Last Z verbunden sind, dass die darin für die zugehörigen Halbwellen alternierend geführten Sekundärströme I2 in derselben Richtung durch die Last Z verlaufen;

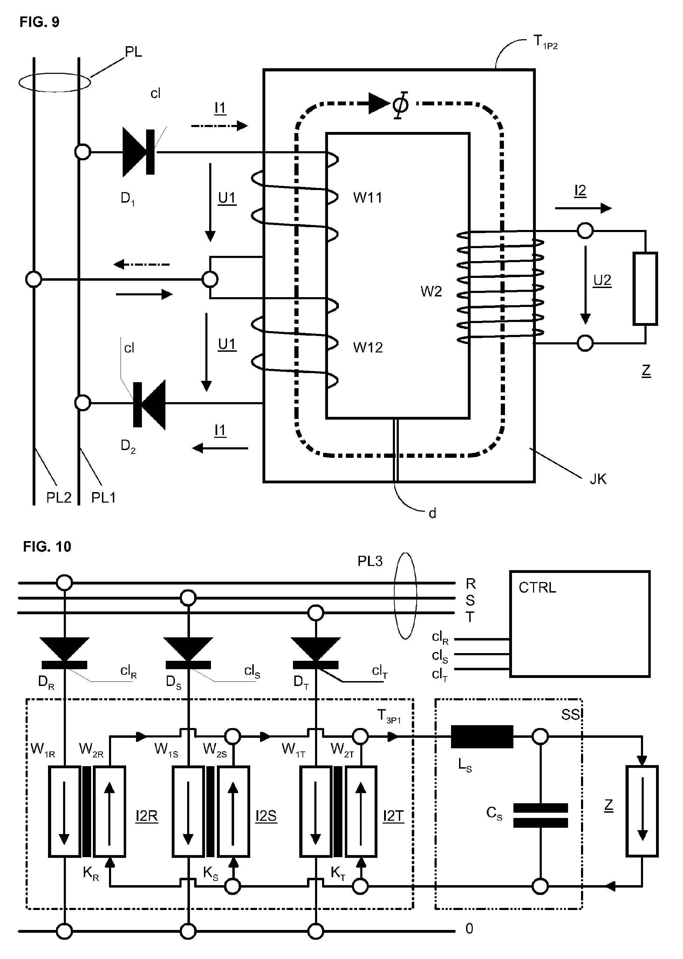

Figur 9      eine erfindungsgemässe Vorrichtung mit einem Transformator $T_{1P2}$ mit zwei an einem gemeinsamen Eisenkern vorgesehenen Primärwicklungen $W_{11}$, $W_{12}$, die je derart über ein Gleichrichterelement D1 bzw. D2 mit der Wechselspannungsquelle Q verbunden und derart am gemeinsamen Magnetgestell JK des Transformators $T_{1P2}$ angeordnet sind, dass alternierend mit jeder Wechselspannungs-Halbwelle entsprechender Polarität je ein Primärstrom I1 in jeder der Primärwicklungen $W_{11}$; $W_{12}$ geführt wird, der den zugehörigen magnetischen Fluss $\Phi$ jeweils in derselben Richtung durch das Magnetgestell JK treibt;

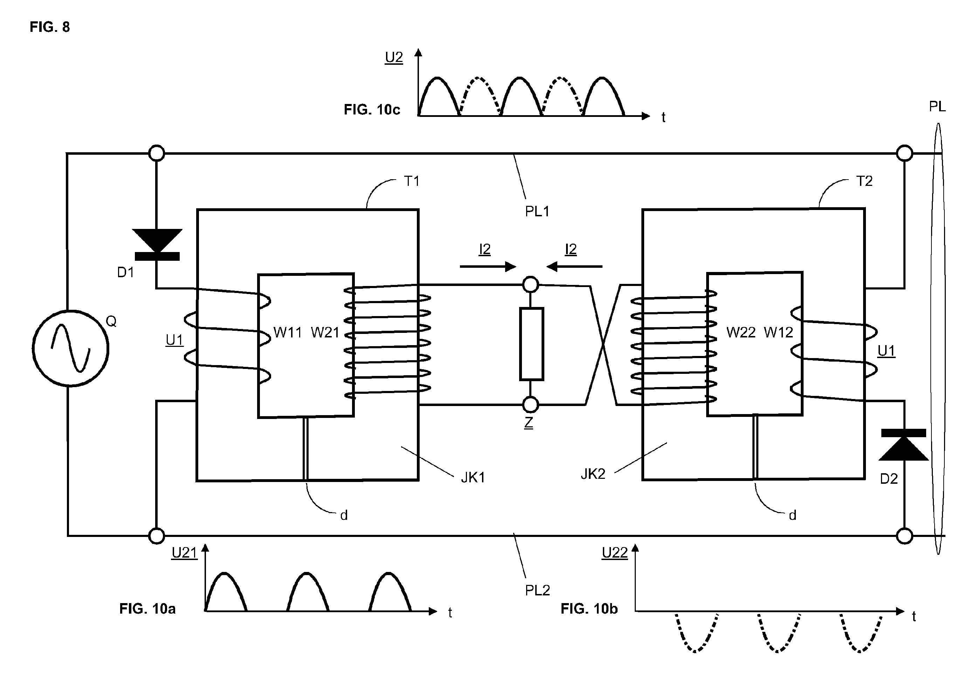

Figur 10     eine erfindungsgemässe Vorrichtung mit einem Transformator $T_{3P1}$ mit drei Primärwicklungen $W_{1R}$, $W_{1S}$, $W_{1T}$, deren erstes Ende je über das zugehörige Gleichrichterelement $D_R$ bzw. $D_S$ bzw. $D_T$ mit einer Phase R, S, T und deren zweites Ende mit dem Nullleiter 0 der Drehstromleitung PL3 verbunden ist und mit Sekundärwicklungen $W_{2R}$, $W_{2S}$, $W_{2T}$, die derart mit der Last Z verbunden sind, dass die alternierend in den Sekundärwicklungen $W_{2R}$, $W_{2S}$, $W_{2T}$ geführten Sekundärströme $I_{2R}$, $I_{2S}$, und $I_{2T}$ stets in derselben Richtung durch die Last Z verlaufen;

Figur 11a    den Verlauf der mittels Phasenanschnittsteuerung eingestellten Primärspannung U1 und des entsprechenden Primärstromes I1;

Figur 11b    den zum Primärstrom I1 von Figur 11a korrespondierenden Verlauf der Sekundärspannung U2 und des Sekundärstromes I2;

Figur 12a    den Verlauf der mittels Phasenanschnittsteuerung eingestellten Primärströme $I1_R$, $I1_S$, $I1_T$ in den Primärwicklungen $W_{1R}$, $W_{1S}$, $W_{1T}$ des Transformators $T_{3P1}$ von Figur 10;

Figur 12b    den Verlauf der Spannung $U_Z$ über dem Lastwiderstand Z von Figur 10;

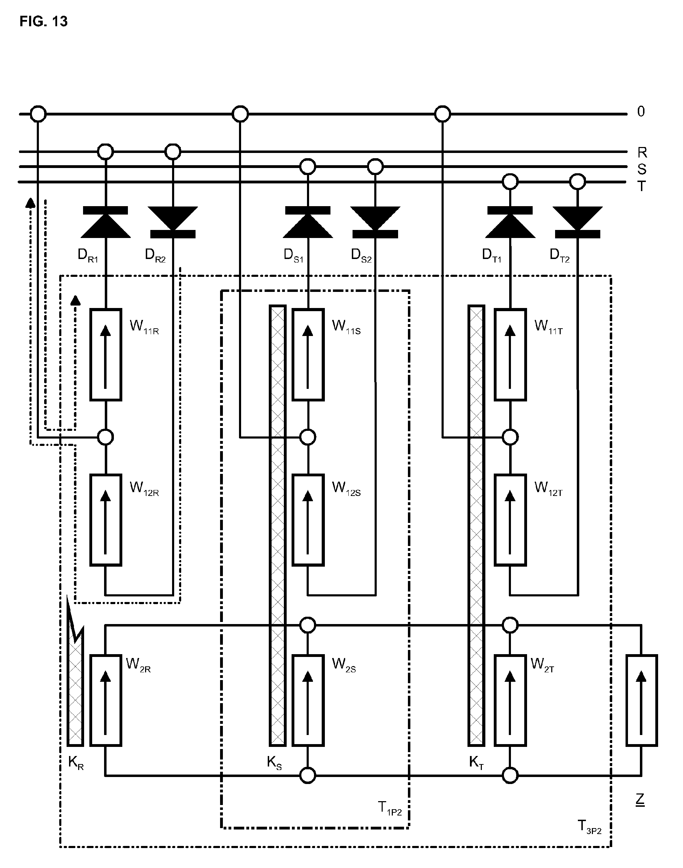

Figur 13     eine erfindungsgemässe Vorrichtung mit einem Transformator $T_{3P2}$ mit drei Paaren von Primärwicklungen $W_{11R}$, $W_{12R}$ bzw. $W_{11S}$, $W_{12S}$ bzw. $W_{11T}$, $W_{12T}$. deren erstes Ende je über das zugehörige Gleichrichterelement $D_{R1}$; $D_{R2}$ bzw. $D_{S1}$; $D_{S2}$ bzw. $D_{T1}$; $D_{T2}$ mit einer Phase R, S, T und deren zweites Ende mit dem Nullleiter 0 einer Drehstromleitung PL3 verbunden ist und mit Sekundärwicklungen $W_{2R}$, $W_{2S}$, $W_{2T}$, die derart mit der Last Z verbunden sind, dass die alternierend in den Sekundärwicklungen $W_{2R}$, $W_{2S}$, $W_{2T}$ geführten Sekundärströme $I_{2R}$, $I_{2S}$, $I_{2T}$ stets in derselben Richtung durch die Last Z verlaufen;

Figur 14a    den Verlauf der mittels Phasenanschnittsteuerung eingestellten Primärströme $I1_{R1}$, $I1_{S1}$, $I1_{T1}$, $I1_{R2}$, $I1_{S2}$, $I1_{T2}$ in den Primärwicklungen $W_{11R}$, $W_{12R}$ bzw. $W_{11S}$, $W_{12S}$ bzw. $W_{11T}$, $W_{12T}$ des Transformators $T_{3P2}$ von Figur 13; und

Figur 14b    den Verlauf der Spannung $U_Z$ über dem Lastwiderstand Z von Figur 13.

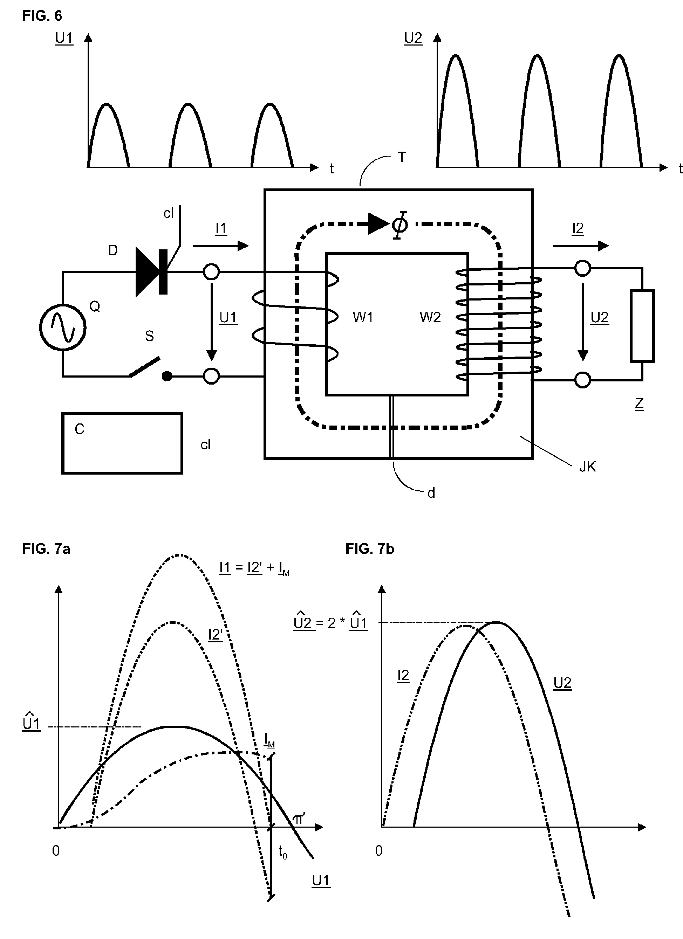

Figur 1 zeigt einen Transformator T, dessen Primärwicklung W1 mit einer Wechselspannungsquelle Q und dessen Sekundärwicklung W2 mit einer Last Z verbunden ist. Die Funktionsweise dieses Transformators T wurde eingangs anhand der Figuren 3, 4 und 5 beschrieben. Für das Verständnis der nachstehenden Erfindung ist das Vektordiagramm von Figur 7 besonders relevant, aus dem hervorgeht, dass sich der Primärstrom I1 im Wesentlichen aus dem Magnetisierungsstrom $I_M$ und dem der Kompensation des Sekundärstroms I2 dienenden Kompensationsstrom I2' zusammensetzt, die sich bezüglich der Phasenlage unterscheiden.
Figur 2 zeigt den Transformator T von Figur 1 mit einer Gleichrichterbrücke GR, welche der Primärwicklung W1 des Transformators T nach dem Schliessen eines Schalters S die in Figur 2a gezeigte pulsierende Gleichspannung U1 zuführt.

In Figur 2b ist gezeigt, dass mittels der primärseitig angelegten pulsierenden Gleichspannung U1, sekundärseitig eine ebenfalls pulsierende Spannung U2 erzeugt wird, deren Gleichspannungsanteil mit einer Zeitkonstante $\tau = L1 / R1$ abklingt, die von der Induktivität L1 und dem Widerstand R1 der Primärwicklung W1 abhängt.

Es ist daher offensichtlich, dass mittels der in Figur 2 gezeigten Vorrichtung lastseitig keine verwertbare Gleichspannung erzeugt werden kann.

Figur 6 zeigt eine erfindungsgemässe Vorrichtung mit dem Transformator T von Figur 1 und mit einem Gleichrichterelement D, über das der Primärwicklung W1 des Transformators T, sofern der gezeigte Schalter S geschlossen ist, Wechselspannungs-Halbwellen U1 gleicher Polarität zugeführt werden. Während einer Halbwelle entsprechender Polarität wird daher der Primärstrom I1 durch das Gleichrichterelement D und durch die Primärwicklung W1 geführt, der gleich Null wird, sobald sich der Magnetisierungsstrom $I_M$ und der der Kompensation des Sekundärstroms I2 dienende Kompensationsstrom I2' gegenseitig aufheben. Nach diesem Zeitpunkt (I1 = 0) sperrt das Gleichrichterelement D bis zum Beginn der nächsten Halbwelle entsprechender Polarität und leitet erst mit Beginn dieser nächsten Halbwelle.

Sofern steuerbare Gleichrichterelemente D vorgesehen sind, können diese mittels der Steuereinheit CTRL (siehe Figur 10) derart gesteuert werden, dass die Phase der zu übertragenden Halbwellen angeschnitten oder einzelne Halbwellen periodisch oder nach Bedarf gänzlich ausgelassen werden. Dadurch kann die Energieabgabe und/oder die Lückung zwischen den übertragenen Halbwellen gesteuert werden, um den Transformator T in einen geeigneten Betriebszustand zu überführen, beispielsweise die vollständige Abgabe der im Transformator T gespeicherten magnetischen Energie W zu ermöglichen.

Die Wechselspannungs-Halbwellen U1, innerhalb derer das Gleichrichterelement D leitet, sind naturgemäss um eine halbe Wellenlänge voneinander beabstandet, für die vom Gleichrichterelement D kein Strom geführt wird.

Während der Zeit in der das Gleichrichterelement D jedoch keinen Strom führt, und die Primärwicklung unterbrochen ist, wird die im Transformator noch gespeicherte Feldenergie W, die sich im Wesentlichen aus der Feldenergie $W_{FE}$ im Eisen und der Feldenergie $W_\delta$ im Luftspalt wie folgt zusammensetzt:

$$W = 1/2 \int H * B * \Delta V \approx W_{FE} + W_\delta = H_{FE} * B_{FE} * V_{FE} + 1/2 \; H_\delta * B_\delta * V_\delta$$

über die Sekundärwicklung W2 soweit abgebaut, dass bei der nächsten Aktivierung des Gleichrichterelements faktisch wieder ein Einschaltvorgang resultiert.

Die magnetische Flussdichte B ist stetig und hat im Luftspalt und im Ferrit näherungsweise die gleiche Grösse ($B \approx B_{FE} \approx B_\delta$). Die magnetische Feldstärke H ist nicht stetig, sie ist im Luftspalt um den Faktor $\mu r$ grösser als im Ferrit.

Das Magnetgestell JK mit der Sekundärwicklung W2 erscheint in diesem Zustand somit als Speicherdrossel. Bei einer Speicherdrossel, die erfindungsgemäss realisiert werden kann, ist der magnetische Kreis des Ferritkernes häufig durch einen Luftspalt d unterbrochen. Die in der Speicherdrossel gespeicherte Energie steckt dann fast vollständig in diesem Luftspalt d. Der Kern K dient nur zur Führung des Magnetfeldes. Der Luftspalt d dient der Verringerung der magnetischen Flussdichte B. Das vermeidet die Sättigung des Kernmaterials und gewährleistet einen lineareren Induktivitätsverlauf auch bei hoher Magnetisierung.

Figur 7a zeigt den Verlauf der Primärspannung U1 und des innerhalb der positiven Halbwelle übertragenen Primärstroms I1, der sich aus dem Magnetisierungsstrom $I_M$ und dem Kompensationsstrom I2' zusammensetzt. In Figur 7a ist gezeigt, dass sich der Magnetisierungsstrom $I_M$ und der Kompensationsstrom I2' zu einem Zeitpunkt $t_0$ gegenseitig aufheben und der Primärstrom I1 zu diesem Zeitpunkt $t_0$ somit Null wird, bevor die Primärspannung U1 zum Zeitpunkt n durch Null läuft. Das Gleichrichterelement D sperrt somit bereits vor dem Nulldurchgang der Primärspannung U1, weshalb zur Relaxation des magnetischen Systems mehr als eine halbe Periodendauer der Primärspannung U1 zur Verfügung steht. Der Zeitpunkt $t_0$ und somit das Verhalten der Vorrichtung lässt sich zudem durch entsprechende Dimensionierung des Luftspalts d weiter beeinflussen.

Figur 7b zeigt den zum Primärstrom I1 korrespondierenden Verlauf der Sekundärspannung U2 und des Sekundärstromes I2, die stets Pulse gleicher Polarität bilden und aufgrund des eingangs beschriebenen Flusshubs von maximal $\pm 2\Phi$ auf den doppelten Wert ansteigen.

Figur 8 zeigt eine erfindungsgemässe Vorrichtung mit zwei Transformatoren T1, T2, deren Primärwicklungen $W_{11}$; $W_{12}$ je über ein Gleichrichterelement D1, D2 mit der Wechselspannungsquelle Q verbunden sind, und deren Sekundärwicklungen $W_{21}$ bzw. $W_{22}$ derart mit der Last Z verbunden sind, dass die darin für die zugehörigen Halbwellen alternierend geführten Sekundärströme I2 in derselben Richtung durch die Last Z verlaufen. Die beiden Gleichrichterelemente D1, D2, in der vorliegenden Ausgestaltung sind dies Halbleiterdioden, sind dabei mit den Kathoden mit der

zugehörigen Primärwicklung $W_{11}$ bzw. $W_{12}$ und mit der Anode mit unterschiedlichen Leitungen PL1 bzw. PL2 der Stromversorgungsleitung PL verbunden. Die Gleichrichterelemente D1, D2 führen daher alternierend Primärströme I1 durch die Primärwicklungen $W_{11}$; $W_{12}$, so dass sich die sekundär erzeugten Pulse, die polaritätsrichtig der Last Z zugeführt werden, zu einer Kette von Pulsen gleicher Polarität ergänzen. Für den Fachmann ist ersichtlich, dass Polaritätswechsel primärseitig oder sekundärseitig auf verschiedene Art realisierbar sind, so dass gleichgerichtete Pulse mit der ersten oder zweiten Polarität problemlos erzeugt werden können. Zur Änderung des Übersetzungsverhältnisses und somit zur Änderung der Grösse der erzeugten Gleichspannung kann die Primärwicklung und/oder die Sekundärwicklung mit Anzapfungen versehen sein, an denen wahlweise eine Primärspannung zugeführt oder eine Sekundärspannung abgenommen werden kann.

Figur 9 zeigt einen Transformator $T_{1P2}$ mit zwei an einem gemeinsamen Eisenkern vorgesehenen Primärwicklungen $W_{11}$, $W_{12}$, die je derart über ein Gleichrichterelement D1 bzw. D2 mit der Wechselspannungsquelle Q verbunden und derart am gemeinsamen Magnetgestell JK des Transformators $T_{1P2}$ angeordnet sind, dass alternierend mit jeder Wechselspannungs-Halbwelle entsprechender Polarität je ein Primärstrom I1 in jeder der Primärwicklungen $W_{11}$; $W_{12}$ geführt wird, der den zugehörigen magnetischen Fluss $\Phi$ stets in derselben Richtung durch den magnetischen Kreis bzw. das Magnetgestell JK treibt. Die beiden steuerbaren Gleichrichterelemente D1 und D2 sind mittels Anode bzw. Kathode mit dem ersten Leiter PL1 der Stromversorgungsleitung PL und mittels der Kathode bzw. der Anode mit einem Ende der zugehörigen Primärwicklung $W_{11}$ bzw. $W_{12}$ verbunden, deren andere Enden gemeinsam mit dem zweiten Leiter PL2 der Stromversorgungsleitung PL verbunden sind. Im Vergleich zur Lösung von Figur 8 wird bei dieser Ausgestaltung der Erfindung nur ein Magnetgestell JK benötigt. Bei der Lösung von Figur 8 reduziert sich hingegen die Verlustleistung. Zudem kann die Lösung von Figur 8 auch mit einer deutlich geringeren Lückung zwischen den geführten Primärströmen I1 realisiert werden, die jedoch elektronisch steuerbar ist, sofern steuerbare Gleichrichterelemente D vorgesehen sind.

Besonders einfach und vorteilhaft ist die Erfindung bei Drehstromsystemen anwendbar. Figur 10 zeigt einen DrehstromTransformator $T_{3P1}$ mit drei Primärwicklungen $W_{1R}$, $W_{1S}$, $W_{1T}$, deren erstes Ende je das Gleichrichterelement $D_R$ bzw. $D_S$ bzw. $D_T$ mit einer zugehörigen Phase R, S, T und deren zweites Ende mit dem Nullleiter 0 der Drehstromleitung PL3 verbunden ist und mit Sekundärwicklungen $W_{2R}$, $W_{2S}$, $W_{2T}$, die derart mit der Last Z verbunden sind, dass die alternierend in den Sekundärwicklungen $W_{2R}$, $W_{2S}$, $W_{2T}$ geführten Sekundärströme $I_{2R}$, $I_{2S}$, und $I_{2T}$ stets in derselben Richtung durch die Last Z verlaufen. Jeder der Gleichrichterelemente $D_R$ bzw. $D_S$ bzw. $D_T$ ist mittels dessen Anode mit der zugehörigen Phase R, S, T der Drehstromleitung PL3, mittels dessen Kathode mit der zugehörigen Primärwicklung $W_{1R}$, $W_{1S}$, $W_{1T}$ und mittels dessen Steuerelektrode $cl_R$, $cl_S$, $cl_T$ mit einem zugehörigen Ausgang einer Steuereinheit CTRL verbunden, mittels der beispielsweise eine Phasenanschnittsteuerung realisierbar ist. Die Sekundärwicklungen $W_{2R}$, $W_{2S}$, $W_{2T}$ sind parallel geschaltet und übertragen Pulse gleicher Polarität zur Last Z geschaltet. Die Pulse werden in einer vorgeschalteten Siebschaltung SS geglättet, die beispielsweise eine in Serie zur Last Z geschaltete Sieddrossel LS und/oder einen parallel zur Last Z geschalteten Ladekondensator $C_L$ aufweist.

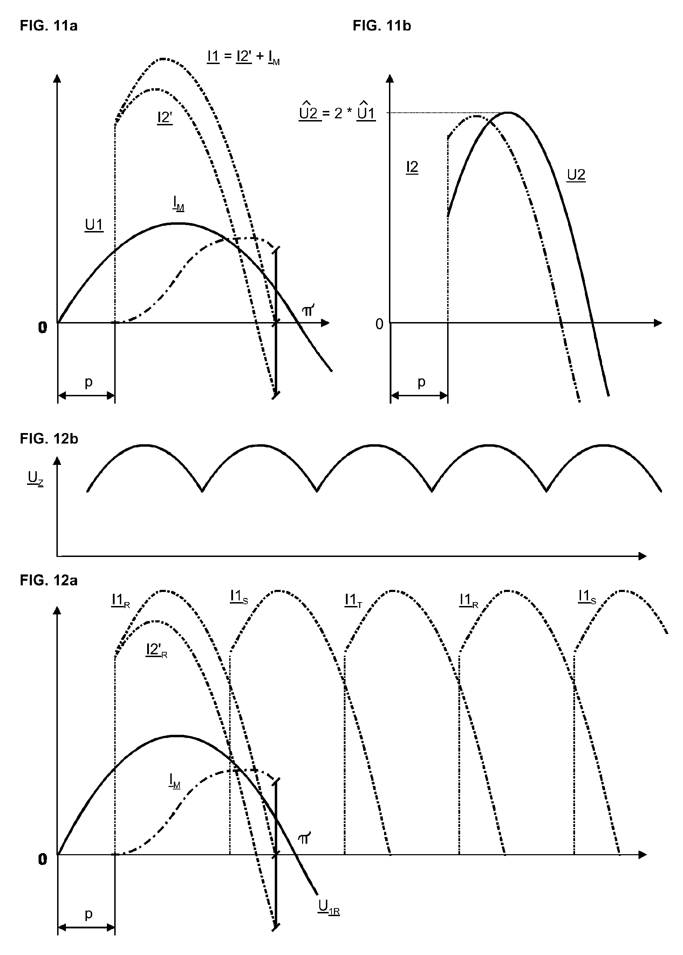

Figur 11a zeigt den Verlauf der mittels Phasenanschnittsteuerung eingestellten Primärspannung U1 und des entsprechenden Primärstromes I1 für eine beliebige der oben beschriebenen Vorrichtungen, die mit einer Phasenanschnittsteuerung versehen ist. Die Gleichrichterelemente $D_R$ bzw. $D_S$ bzw. $D_T$ beginnen daher nicht bereits zu Beginn der entsprechenden Halbwelle der Spannung U1, sondern erst nach Erhalt eines Steuersignals und somit mit einer Verzögerung p zu leiten. Figur 11b zeigt die zum Primärstrom I1 von Figur 11a korrespondierenden Verläufe der Sekundärspannung U2 und des Sekundärstromes I2.

Figur 12a zeigt den Verlauf der mittels Phasenanschnittsteuerung eingestellten Primärströme $I1_R$, $I1_S$, $I1_T$ in den Primärwicklungen $W_{1R}$, $W_{1S}$, $W_{1T}$ des Transformators $T_{3P1}$ von Figur 10. Figur 12b zeigt den Verlauf der Spannung $U_Z$ über dem Lastwiderstand Z von Figur 10.

Figur 13 zeigt einen Transformator $T_{3P2}$ mit drei Paaren von Primärwicklungen $W_{11R}$, $W_{12R}$ bzw. $W_{11S}$, $W_{12S}$ bzw. $W_{11T}$, $W_{12T}$, deren erstes Ende je über das zugehörige Gleichrichterelement $D_{R1}$; $D_{R2}$ bzw. $D_{S1}$; $D_{S2}$ bzw. $D_{T1}$; $D_{T2}$ mit einer Phase R, S, T und deren zweites Ende mit dem Nullleiter 0 einer Drehstromleitung PL3 verbunden ist und mit Sekundärwicklungen $W_{2R}$, $W_{2S}$, $W_{2T}$, die derart mit der Last Z verbunden sind, dass die alternierend in den Sekundärwicklungen $W_{2R}$, $W_{2S}$, $W_{2T}$ geführten Sekundärströme $I_{2R}$, $I_{2S}$, $I_{2T}$ stets in derselben Richtung durch die Last Z verlaufen.

Die Paare der Primärwicklungen $W_{11R}$, $W_{12R}$ bzw. $W_{11S}$, $W_{12S}$ bzw. $W_{11T}$, $W_{12T}$ sind in Serie geschaltet und über den Kopplungspunkt mit dem Nullleiter 0 der Drehstromleitung PL3 verbunden. Die freien Enden der Primärwicklungen $W_{11R}$, $W_{12R}$ bzw. $W_{11S}$, $W_{12S}$ bzw. $W_{11T}$, $W_{12T}$ sind hingen über ein Gleichrichterelement $D_{R1}$, $D_{R2}$ bzw. $D_{S1}$, $D_{S2}$ bzw. $D_{T1}$, $D_{T2}$ mit der zugehörigen Phase R, S, T der Drehstromleitung PL3 verbunden, wobei das erste Gleichrichterelement $D_{R1}$ bzw. $D_{S2}$ bzw. $D_{T2}$ mit der Anode und das zweite Gleichrichterelement $D_{R2}$ bzw. $D_{S2}$ bzw. $D_{T2}$ mit der Kathode mit der zugehörigen Phase R, S, T der Drehstromleitung PL3 verbunden ist. Die einander zugehörigen Primärwicklungen und Sekundärwicklungen $W_{11R}$, $W_{12R}$, $W_{2R}$ bzw. $W_{11S}$, $W_{12S}$, $W_{2S}$ bzw. $W_{11T}$, $W_{12T}$, $W_{2T}$ sind dabei je auf einem separaten Kern $K_R$, $K_S$, $K_T$ des Magnetgestells angeordnet. Grundsätzlich kann der Drehstromtransformator $T_{3P2}$ auch aus Einphasentransformatoren $T_{IP2}$ zusammengesetzt sein, wie sie in den oben beschriebenen Vorrichtungen verwendet werden.

Bei der in Figur 13 gezeigten Vorrichtung leitet jeweils eines der vorzugsweise steuerbaren Gleichrichterelemente $D_{R1}$; $D_{R2}$; $D_{S1}$; $D_{S2}$; $D_{T1}$; $D_{T2}$ für eine Halbwelle jeder der drei Phasen R, S, T, so dass jeweils sechs Pulse übertragen werden.

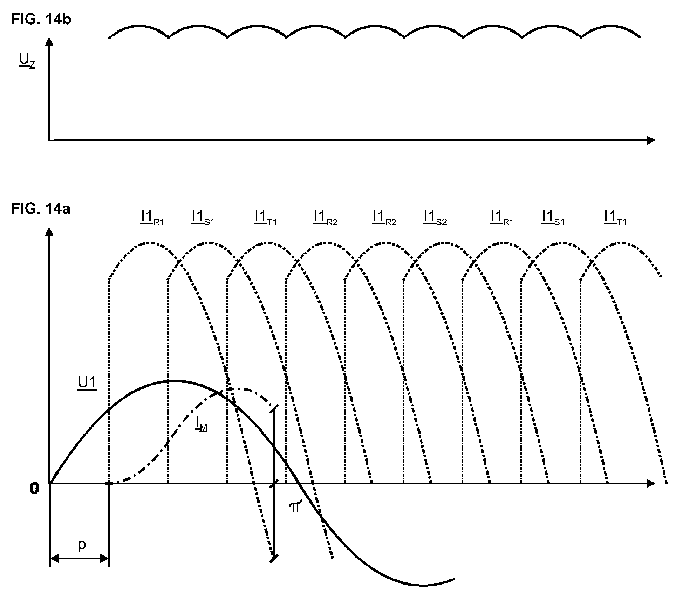

Figur 14a zeigt den Verlauf der mittels Phasenanschnittsteuerung eingestellten Primärströme $I1_{R1}$, $I1_{S1}$, $I1_{T1}$, $I1_{R2}$, $I1_{S2}$, $I1_{T2}$ in den Primärwicklungen $W_{11R}$, $W_{12R}$ bzw. $W_{11S}$, $W_{12S}$ bzw. $W_{11T}$, $W_{12T}$ des Transformators $T_{3P2}$ von Figur 13; und

Figur 14b zeigt den bereits weitgehend glatten Verlauf der Spannung $U_Z$ über dem Lastwiderstand Z von Figur 13.

**Patentansprüche**

1. Vorrichtung zur Erzeugung einer Gleichspannung oder eines Gleichstromes, mit wenigstens einem Gleichrichterelement (D) und wenigstens einem Transformator (T), der wenigstens eine über Leiter (PL1, PL2) einer Stromversorgungsleitung (PL) mit einer Wechselspannungsquelle (Q) zu verbindende Primärwicklung (W1) und wenigstens eine mit einer Last (Z) verbundene Sekundärwicklung (W2) aufweist, die an einem zugehörigen Magnetgestell (JK) angeordnet sind, das der Führung eines magnetischen Flusses Φ dient, **dadurch gekennzeichnet, dass** die Primärwicklung (W1) über das Gleichrichterelement (D) mit der Wechselspannungsquelle (Q) verbunden ist, so dass für jede Wechselspannungs-Halbwelle entsprechender Polarität ein Primärstrom I1 durch das Gleichrichterelement (D) und durch die Primärwicklung (W1) führbar ist, der den magnetischen Fluss Φ stets in derselben Richtung durch das Magnetgestell (JK) treibt.

2. Vorrichtung nach Anspruch 1, **dadurch gekennzeichnet, dass** zwei Primärwicklungen ($W_{11}$; $W_{12}$) je derart über ein Gleichrichterelement (D1 bzw. D2) mit der Wechselspannungsquelle (Q) verbunden und derart am gemeinsamen Magnetgestell (JK) des Transformators ($T_{1P2}$) angeordnet sind, dass alternierend mit jeder Wechselspannungs-Halbwelle entsprechender Polarität je ein Primärstrom I1 in jeder der Primärwicklungen ($W_{11}$; $W_{12}$) geführt wird, der den zugehörigen magnetischen Fluss Φ jeweils in derselben Richtung durch das Magnetgestell (JK) treibt.

3. Vorrichtung nach Anspruch 1, **dadurch gekennzeichnet, dass** zwei Primärwicklungen ($W_{11}$; $W_{12}$) je über ein Gleichrichterelement (D) mit der Wechselspannungsquelle (Q) verbunden und an separaten Magnetgestellen (JK1, JK2) angeordnet sind und dass die je an einem der beiden Magnetgestelle (JK1, JK2) angeordneten Sekundärwicklungen ($W_{21}$ bzw. $W_{22}$) derart mit der Last (Z) verbunden sind, dass die darin für die zugehörigen Halbwellen alternierend geführten Sekundärströme I2 in derselben Richtung durch die Last (Z) verlaufen.

4. Vorrichtung nach Anspruch 2 oder 3, **dadurch gekennzeichnet,**

   a) **dass** die Primärwicklungen ($W_{11}$; $W_{12}$) je mit einem ersten Ende je über unterschiedlich gepolte Gleichrichterelemente (D1 bzw. D2) mit dem ersten Leiter (PL1) der Versorgungsleitung (PL) und mit dem zweiten Ende der Primärwicklungen ($W_{11}$; $W_{12}$) mit dem zweiten Leiter (PL1) der Versorgungsleitung (PL) verbunden sind, oder
   b) **dass** die Primärwicklungen ($W_{11}$; $W_{12}$) je mit einem ersten Ende je über gleich gepolte Gleichrichterelemente (D1 bzw. D2) und mit den zweiten Ende der Primärwicklungen ($W_{11}$; $W_{12}$) mit unterschiedlichen Leitern (PL1 bzw. PL2 sowie PL2 bzw. PL1) der Versorgungsleitung (PL) verbunden sind.

5. Vorrichtung nach Anspruch 1, **dadurch gekennzeichnet, dass** der Transformator ($T_{3P1}$) drei Primärwicklungen ($W_{1R}$, $W_{1S}$, $W_{1T}$) aufweist, deren erstes Ende je über das zugehörige Gleichrichterelement ($D_R$ bzw. $D_S$ bzw. $D_T$) mit einer Phase (R, S, T) einer Drehstromleitung (PL3) und deren zweites Ende mit dem Nullleiter (0) einer Drehstromleitung (PL3) verbunden ist und dass der Transformator ($T_{3P1}$) magnetisch mit den Primärwicklungen ($W_{1R}$, $W_{1S}$, $W_{1T}$) gekoppelte Sekundärwicklungen ($W_{2R}$, $W_{2S}$, $W_{2T}$) aufweist, die derart mit der Last (Z) verbunden sind, dass die alternierend in den Sekundärwicklungen ($W_{2R}$, $W_{2S}$, $W_{2T}$) geführten Sekundärströme $I_{2R}$, $I_{2S}$, und $I_{2T}$ stets in derselben Richtung durch die Last (Z) verlaufen.

6. Vorrichtung nach Anspruch 1, **dadurch gekennzeichnet, dass** der Transformator ($T_{3P2}$) drei Paare von Primärwicklungen ($W_{11R}$, $W_{12R}$ bzw. $W_{11S}$, $W_{12S}$ bzw. $W_{11T}$, $W_{12T}$) aufweist, deren erstes Ende je über das zugehörige Gleichrichterelement ($D_{R1}$; $D_{R2}$ bzw. $D_{S1}$; $D_{S2}$ bzw. $D_{T1}$; $D_{T2}$) mit einer Phase (R, S, T) einer Drehstromleitung (PL3) und deren zweites Ende mit dem Nullleiter (0) der Drehstromleitung (PL3) verbunden ist und dass der Transformator ($T_{3P1}$) magnetisch mit den Primärwicklungen ($W_{1R}$, $W_{1S}$, $W_{1T}$) gekoppelte Sekundärwicklungen ($W_{2R}$, $W_{2S}$, $W_{2T}$)

aufweist, die derart mit der Last (Z) verbunden sind, dass die alternierend in den Sekundärwicklungen ($W_{2R}$, $W_{2S}$, $W_{2T}$) geführten Sekundärströme $I_{2R}$, $I_{2S}$, $I_{2T}$ stets in derselben Richtung durch die Last (Z) verlaufen.

7. Vorrichtung nach Anspruch 6 oder 7, **dadurch gekennzeichnet, dass** die miteinander gekoppelten Primär- und Sekundärwicklungen ($W_{1R}$, $W_{2R}$ bzw. $W_{1S}$, $W_{2S}$ bzw. $W_{1T}$, $W_{2T}$) bzw. ($W_{11R}$, $W_{12R}$, $W_{2R}$ bzw. $W_{11S}$, $W_{12S}$, $W_{2S}$ bzw. $W_{11T}$, $W_{12T}$, $W_{2T}$) je auf einem Kern ($K_R$ bzw. $K_S$ bzw. $K_T$) des Magnetgestells angeordnet sind.

8. Vorrichtung nach einem der Ansprüche 1 - 7, **dadurch gekennzeichnet, dass** das oder die Magnetgestelle (JK), vorzugsweise wenigstens ein Joch oder ein Kern, einen Luftspalt (d) aufweisen, der vorzugsweise derart gewählt ist, dass die Feldstärke im Eisen einen vorgesehenen Wert nie überschreitet.

9. Vorrichtung nach einem der Ansprüche 1 - 8, **dadurch gekennzeichnet, dass** das Gleichrichterelement (D) bzw. die Gleichrichterelemente (D1, D2 oder $D_R$ bzw. $D_S$ bzw. $D_T$ oder $D_{R1}$; $D_{R2}$ bzw. $D_{S1}$; $D_{S2}$ bzw. $D_{T1}$; $D_{T2}$) einen mit einer Steuereinheit (CTRL) verbundenen Steuereingang (cl; $cl_R$, $cl_S$, $cl_T$) aufweisen und von der Steuereinheit (CTRL) derart steuerbar sind, dass die Phasen der zu übertragenden Halbwellen gleicher Polarität angeschnitten und/oder einzelne Halbwellen gleicher Polarität periodisch oder bedarfsweise nicht übertragen werden.

10. Vorrichtung nach Anspruch 9, **dadurch gekennzeichnet, dass** das Gleichrichterelement (D) bzw. jedes der Gleichrichterelemente (D1, D2 oder $D_R$ bzw. $D_S$ bzw. $D_T$ oder $D_{R1}$; $D_{R2}$ bzw. $D_{S1}$; $D_{S2}$ bzw. $D_{T1}$; $D_{T2}$) ein steuerbarer Halbleiter, vorzugsweise ein Thyristor oder ein Triac ist.

11. Vorrichtung nach einem der Ansprüche 1 - 10, **dadurch gekennzeichnet, dass** die Sekundärwicklung (W2) bzw. die Sekundärwicklungen ($W_{21}$, $W_{22}$ bzw. $W_{2R}$, $W_{2S}$, $W_{2T}$ bzw. ($W_{1R}$, $W_{2R}$ bzw. $W_{1S}$, $W_{2S}$ bzw. $W_{1T}$, $W_{2T}$) mit der Last (Z) über eine aktive oder passive Siebschaltung (S), die wenigstens ein Bauelement, gegebenenfalls eine in Serie geschaltete Drossel ($L_S$) und/oder ein parallel zur Last (Z) geschalteter Ladekondensator ($C_S$) aufweist, verbunden ist bzw. sind.

12. Vorrichtung nach einem der Ansprüche 1 - 11, **dadurch gekennzeichnet, dass** das Übersetzungsverhältnis des Transformators (T, ...) bzw. der Transformatoren (T, ...) änderbar ist.

13. Verfahren zur Erzeugung einer Gleichspannung oder eines Gleichstromes, insbesondere mit einer Vorrichtung nach einem der Ansprüche 1-12, die an eine ein- oder mehrphasige Wechselspannungsquelle (Q) angeschlossen ist, und zur Wandlung der elektrischen Energie wenigstens ein Gleichrichterelement (D1, D2 oder $D_R$ bzw. $D_S$ bzw. $D_T$ oder $D_{R1}$; $D_{R2}$ bzw. $D_{S1}$; $D_{S2}$ bzw. $D_{T1}$; $D_{T2}$) und wenigstens einen Transformator (T, T1, T2, $T_{1P2}$, $T_{3P1}$, $T_{3P2}$) aufweist, **dadurch gekennzeichnet, dass** jedes Gleichrichterelement (D1, D2 oder $D_R$ bzw. $D_S$ bzw. $D_T$ oder $D_{R1}$; $D_{R2}$ bzw. $D_{S1}$; $D_{S2}$ bzw. $D_{T1}$; $D_{T2}$) periodisch oder bedarfsweise Halbwellen der gleichen Polarität an die zugehörige Primärwicklung (W1, ...) abgibt, welche von der zugehörigen Sekundärwicklung (W2) der Last (Z) polaritätsrichtig zugeführt werden.

**FIG. 1**

$$\underline{I1} = \underline{I}_{10} + \underline{I'2}$$
$$\underline{I1} = \underline{I}_{10} + \underline{I2} * N2/N1$$

$\underline{Z} = R + jX$

**FIG. 2**

**FIG. 2a**

**FIG. 2b**

**FIG. 3**

U1

$\underline{I}_{10}$

$\underline{I}_{FE}$

$\underline{I}_M$

$\overline{\phi}_0$

E1

E2

**FIG. 4**

$\theta_1 = \underline{I2}' * N1$

$\theta_0 = \underline{I}_M * N1$

$\theta_2 = \underline{I2} * N2$

**FIG. 5**

U1

$\underline{I1}$

a1

$\underline{I2}'$

$\underline{I}_{10}$

180°

$\underline{I}_{FE}$

$\overline{\phi}_0$

$\underline{I}_M$

$\underline{I2}$

a2

E1

U2   E2

**FIG. 6**

**FIG. 7a**

$$I1 = I2' + I_M$$

**FIG. 7b**

$$\hat{U2} = 2 * \hat{U1}$$

FIG. 8

PL

T2

U1

D2

W22 W12

d

JK2

PL2

I2

I2

Z

PL1

T1

JK1

W11 W21

d

D1

Q

U1

U2

FIG. 10c

t

U22

FIG. 10b

t

U21

FIG. 10a

t

**FIG. 9**

**FIG. 10**

FIG. 11a

$\underline{I1} = \underline{I2}' + I_M$

$\underline{I2}'$

$I_M$

$\underline{U1}$

$\pi'$

0

p

FIG. 11b

$\widehat{\underline{U2}} = 2 * \widehat{\underline{U1}}$

$\underline{I2}$

$\underline{U2}$

0

p

FIG. 12b

$\underline{U}_Z$

FIG. 12a

$\underline{I1}_R$     $\underline{I1}_S$     $\underline{I1}_T$     $\underline{I1}_R$     $\underline{I1}_S$

$\underline{I2}'_R$

$I_M$

$\pi'$

0

$\underline{U}_{1R}$

p

FIG. 13

**FIG. 14b**

$\underline{U}_Z$

**FIG. 14a**

$\underline{I1}_{R1}$  $\underline{I1}_{S1}$  $\underline{I1}_{T1}$  $\underline{I1}_{R2}$  $\underline{I1}_{R2}$  $\underline{I1}_{S2}$  $\underline{I1}_{R1}$  $\underline{I1}_{S1}$  $\underline{I1}_{T1}$

$\underline{U1}$

$\underline{I}_M$

0

$\pi$

p

**Europäisches Patentamt**

**EUROPÄISCHER RECHERCHENBERICHT**

**Nummer der Anmeldung**

EP 07 10 1724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 844 728 A2 (SAMSUNG ELECTRONICS CO LTD [KR]) 27. Mai 1998 (1998-05-27)<br>* Zusammenfassung *<br>* Abbildungen 1,2B,2D * | 1,2,11, 13 | INV.<br>H02M7/06<br>H02M7/08<br>H02M7/12 |
| Y | | 8-10,12 | H02M7/145 |
| A | | 6,7 | H02M7/155<br>H02M7/17 |
| | ----- | | |
| X | US 5 731 969 A (SMALL KENNETH T [US]) 24. März 1998 (1998-03-24)<br>* Abbildungen 4,9,10,13 *<br>* Spalte 4, Zeilen 21-25 *<br>* Spalte 5, Zeilen 4-7 *<br>* Spalte 6, Zeile 14 - Spalte 7, Zeile 6 * | 1,3-5, 11,13 | |
| A | | 6-8,12 | |
| | ----- | | |
| Y | DE 39 01 792 A1 (PHILIPS PATENTVERWALTUNG [DE] LUCENT TECHNOLOGIES INC [US]) 9. August 1990 (1990-08-09)<br>* Abbildung 3 *<br>* Spalte 1, Zeilen 5-15,54-60 *<br>* Spalte 2, Zeilen 37-44 * | 8 | |
| | ----- | | RECHERCHIERTE SACHGEBIETE (IPC) |
| Y | DE 32 43 337 A1 (LICENTIA GMBH [DE]) 24. Mai 1984 (1984-05-24)<br>* Abbildung 1 * | 9,10 | H02M |
| | ----- | | |
| Y | DE 725 045 C (FERNSEH GMBH) 12. September 1942 (1942-09-12)<br>* Abbildung 2 *<br>----- | 12 | |

Der vorliegende Recherchenbericht wurde für alle Patentansprüche erstellt

| Recherchenort | Abschlußdatum der Recherche | Prüfer |
|---|---|---|
| München | 1. August 2007 | Zettler, Karl-Rudolf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 07 10 1724

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-08-2007

| Im Recherchenbericht angeführtes Patentdokument | Datum der Veröffentlichung | Mitglied(er) der Patentfamilie | Datum der Veröffentlichung |
|---|---|---|---|
| EP 0844728 A2 | 27-05-1998 | CN 1183666 A<br>DE 69711817 D1<br>DE 69711817 T2<br>ES 2171842 T3<br>US 5917715 A | 03-06-1998<br>16-05-2002<br>29-08-2002<br>16-09-2002<br>29-06-1999 |
| US 5731969 A | 24-03-1998 | KEINE | |
| DE 3901792 A1 | 09-08-1990 | KEINE | |
| DE 3243337 A1 | 24-05-1984 | KEINE | |
| DE 725045 C | 12-09-1942 | KEINE | |

EPO FORM P0461

Für nähere Einzelheiten zu diesem Anhang : siehe Amtsblatt des Europäischen Patentamts, Nr.12/82